# EUROPÄISCHE PATENTANMELDUNG

(11) **EP 4 015 991 A1**
(43) Veröffentlichungstag der Anmeldung: **22.06.2022**
(21) Anmeldenummer: 20213988.7
(22) Anmeldetag: 15.12.2020
(51) Int. Cl.: G01B 11/25, H04N 9/31, B25H 7/00, G06T 5/00, G06T 7/00

(54) **VERFAHREN ZUR VISUALISIERUNG EINES PLANS IN REALMASSEN UND ZUR KONSTRUKTION EINES GEGENSTANDS**

(71) Anmelder: Robotic Eyes GmbH, 8010 Graz (AT)
(72) Erfinder: Walcher, Wolfgang, 8010 Graz (AT); Reitinger, Bernhard, 8323 St. Marein (AT)
(74) Vertreter: Schwarz & Partner Patentanwälte GmbH

(57) **Zusammenfassung**

Verfahren zur Visualisierung eines Plans in Realmaßen, wobei in einem Kalibrierungsschritt, unter Anwendung eines Raster-Reflexionsverfahrens, ein Sendemuster mittels einer Projektionseinheit (2) auf eine Projektionsfläche (5) projiziert, und ein von der Projektionsfläche (5) reflektiertes Empfangsmuster von zumindest einer Sensoreinheit (3) erfasst wird, und mittels einer, mit der Projektionseinheit (2) und der Sensoreinheit (3) verbundenen Rechnereinheit (4) anhand einer Verzerrung des Empfangsmusters im Vergleich zum Sendemuster eine Oberflächenform, sowie eine Lage der Projektionsfläche (5) in Relation zu einer Position der Projektionseinheit (2) und zu einer Position der Sensoreinheit (3) erfasst wird, und mittels der Rechnereinheit (4) anhand der im Kalibrierungsschritt erfassten Oberflächenform und Lage der Projektionsfläche (5) in Relation zur Projektionseinheit (2) eine Projektionsverzerrung an dem Plan durchgeführt, und der verzerrte Plan von der Projektionseinheit (2) derart auf die Projektionsfläche (5) projiziert wird, sodass der projizierte Plan (13) auf der Projektionsfläche (5) einer unverzerrten, ebenen Darstellung des Plans in Realmaßen entspricht.

## Beschreibung

Die Erfindung betrifft ein Verfahren zur Visualisierung eines Plans in Realmaßen.

Auf dem Gebiet der industriellen Konstruktion, beispielsweise von Gebäudeteilen oder von komplexen Maschinen, werden Konstruktionselemente gemäß Konstruktionsplänen in einer vorgegebenen Reihenfolge angeordnet und in einem komplexen Prozess miteinander verbunden. Insbesondere bei Betonfertigteilen, aber auch beispielsweise im Maschinenbau und im Rahmen von Fertigungsstraßen in der Automobilindustrie oder im Flugzeugbau, werden hierbei manche Fertigungsschritte von Arbeitern per Hand, und andere Fertigungsschritte maschinell durchgeführt. Um einen reibungslosen Ablauf der Fertigung, eine hohe Produktqualität und eine hohe Fertigungspräzision zu gewährleisten, sowie etwaige Mängel in den fertigen Produkten auszuschließen, ist es zwingend erforderlich, dass die richtigen Konstruktionselemente in einer genau definierten Position und zum Teil auch einer genau definierten Abfolge montiert werden.

Beispielsweise auf dem Gebiet der Betonfertigteile werden Konstruktionselemente einer Bewehrung, wie beispielsweise Metallstangen, in einem Gitter angeordnet. Bei dieser Tätigkeit ist es unerlässlich, dass eine vorgegebene Gitterweite, sowie ein definierter Abstand zu einer Oberfläche des fertiggestellten Betonteils eingehalten wird.

Eine große Herausforderung bei der Konstruktion von Betonfertigteilen ist, dass in Betonfertigteilen Elemente wie beispielsweise Leerverrohrungen verlaufen, welche während der Konstruktion des Betonfertigteils in den Beton eingegossen werden. Dies setzt voraus, dass in der Bewehrung entsprechende Ausnehmungen beziehungsweise Leerstellen vorhanden sind, um diese Leerverrohrungen und vorgefertigten Elemente im Betonteil anzuordnen. Herkömmlicherweise ordnen Arbeiter die Bewehrungselemente eines Betonteils gemäß einem Plan von Hand an, wobei derartige Ausnehmungen bereits in diesem Arbeitsschritt berücksichtigt werden müssen. Dies ist jedoch mit einem erheblichen Zeitaufwand verbunden, und erfordert ein hohes Maß an Aufmerksamkeit, Präzision und räumlichen Vorstellungsvermögen. Wird auf eine Ausnehmung vergessen, oder werden die Bewährungselemente nicht präzise angeordnet, muss die Bewehrung nach deren Fertigstellung, und vor der Befüllung mit Beton nachbearbeitet werden. Hierbei werden die Bewehrungselemente durchgeschnitten, wodurch die Bewehrung in Folge dessen in der Regel nicht mehr die notwendige strukturelle Integrität aufweist. Wird dies nicht beispielsweise durch weitere Bewehrungen korrigiert, kann dies Schäden beziehungsweise Risse im fertigen Betonelement zur Folge haben. Schlimmstenfalls versagt die Bewehrung am fertigen Betonelement an der entstandenen Schwachstelle vollständig, und das Betonelement reißt oder zersplittert unter Last. Dies stellt einerseits ein wesentliches Sicherheitsrisiko dar und, andererseits muss im Fall eines derartigen Qualitätsmangels das Betonteil an der Baustelle getauscht werden, was mit erheblichen Zusatzkosten und Bauverzögerungen verbunden ist. Eine präzise Fertigung und ein hoher Standard an Qualitätssicherung bei der Fertigung von Betonteilen ist somit unerlässlich.

Auch im Maschinen- und Anlagenbau oder auf dem Gebiet der Fertigung in der Automobilindustrie oder der Flugzeugindustrie können fehlerhaft oder nicht spezifikationsgemäß gefertigte oder eingebaute Komponenten ein wesentliches Sicherheitsrisiko darstellen und/oder zu kostspieligen Folgeschäden und Verzögerungen führen.

Der Erfindung liegt die Aufgabe zugrunde, diese Nachteile und Probleme des Standes der Technik zu vermeiden.

Erfindungsgemäß wird die Aufgabe durch die Bereitstellung eines Verfahrens zur Visualisierung eines Plans in Realmaßen gelöst, wobei in einem Kalibrierungsschritt, unter Anwendung eines Raster-Reflexionsverfahrens, ein Sendemuster mittels einer Projektionseinheit auf eine Projektionsfläche projiziert, und ein von der Projektionsfläche reflektiertes Empfangsmuster von zumindest einer Sensoreinheit erfasst wird, und mittels einer, mit der Projektionseinheit und der Sensoreinheit verbundenen Rechnereinheit anhand einer Verzerrung des Empfangsmusters im Vergleich zum Sendemuster eine Oberflächenform, sowie eine Lage der Projektionsfläche in Relation zu einer Position der Projektionseinheit und zu einer Position der Sensoreinheit erfasst wird;
und mittels der Rechnereinheit anhand der im Kalibrierungsschritt erfassten Oberflächenform und Lage der Projektionsfläche in Relation zur Projektionseinheit eine Projektionsverzerrung an dem Plan durchgeführt, und der verzerrte Plan von der Projektionseinheit derart auf die Projektionsfläche projiziert wird, sodass der projizierte Plan auf der Projektionsfläche einer unverzerrten, ebenen Darstellung des Plans in Realmaßen entspricht.

Durch das erfindungsgemäße Verfahren wird ein unverzerrter Plan, beispielsweise ein Bewehrungsplan, oder ein Konstruktionsplan in Realmaßen auf die Projektionsfläche projiziert. Im Zuge des Kalibrierungsschritts wird die Oberfläche und somit beispielsweise Wölbungen in und/oder eine Neigung der Projektionsfläche erfasst, wodurch bei der Projektion des Plans eine entsprechende Projektionskorrektur durchgeführt werden kann. Zudem werden Lagedaten der Projektionsfläche in Relation zur Projektionseinheit erfasst. Hierdurch wird es ermöglicht, dass eine derart ermittelte Projektionsverzerrung auf einen beliebigen Plan, beispielsweise den genannten Bewehrungsplan angewandt werden kann. Hierdurch wird eine etwaige Schräglage oder Wölbungen in der Projektionsfläche korrigiert, und ermöglicht den Plan unverzerrt, und in Realmaßen auf die Projektionsfläche zu projizieren. Ein Arbeiter muss somit nicht mehr für jeden Arbeitsschritt auf einen gesonderten Plan zurückgreifen, diesen interpretieren und beispielsweise ein Konstruktionselement gemäß seiner Planinterpretation anordnen. Das erfindungsgemäße Verfahren erleichtert diesen Prozess maßgeblich, indem der Plan direkt, unverzerrt und maßstabsgetreu in Realmaßen projiziert wird. Der Arbeiter muss somit nur mehr das jeweilige Konstruktionselement im projizierten Plan identifizieren und unmittelbar an der im projizierten Plan dargestellten Position anordnen. Hierdurch wird eine ganze Reihe an möglichen Fehlerquellen im Zuge der Konstruktion vermieden.

Gemäß einer bevorzugten Ausführungsform des erfindungsgemäßen Verfahrens wird der Kalibrierungsschritt nach einer vorbestimmten Zeitspanne, nach einer mittels eines Temperatursensors erfassten Veränderung einer Temperatur der Projektionseinheit um mehr als einen vorbestimmten Grenzwert, nach einer Benutzereingabe an der Rechnereinheit, und/oder nach einer mittels eines Lagesensors erfassten Erschütterung, oder Bewegung, oder nach einer Positionsveränderung der Projektionseinheit und/oder der Sensoreinheit wiederholt. Hierdurch wird eine Kompensation für Umwelteinflüsse erreicht, und sichergestellt, dass der projizierte Plan stets einer unverzerrten, ebenen Darstellung des Plans in Realmaßen entspricht.

Gemäß einer alternativen Ausführungsvariante des erfindungsgemäßen Verfahrens wird der Kalibrierungsschritt zusätzlich für zumindest eine zweite Projektionseinheit ausgeführt, wobei ein zweites Sendemuster mittels der zumindest einen zweiten Projektionseinheit auf die Projektionsfläche projiziert, und ein von der Projektionsfläche reflektiertes zweites Empfangsmuster von der Sensoreinheit erfasst wird, und mittels der, mit der zumindest einen zweiten Projektionseinheit und der Sensoreinheit verbundenen Rechnereinheit anhand einer Verzerrung des zweiten Empfangsmusters im Vergleich zum zweiten Sendemuster die Oberflächenform, sowie die Lage der Projektionsfläche in Relation zu einer Position der zumindest einen zweiten Projektionseinheit und zu der Position der Sensoreinheit erfasst wird. Zudem wird mittels der Rechnereinheit anhand der im Kalibrierungsschritt erfassten Oberflächenform und Lage der Projektionsfläche in Relation zur zweiten Projektionseinheit eine Projektionsverzerrung an einem zweiten Plan durchgeführt, und der verzerrte zweite Plan wird von der zweiten Projektionseinheit derart auf die Projektionsfläche projiziert, sodass der projizierte zweite Plan auf der Projektionsfläche einer unverzerrten, ebenen Darstellung des zweiten Plans in Realmaßen entspricht. Hierdurch wird der Vorteil erreicht, dass ein oder mehrere Pläne auf einen größeren Bereich der Projektionsfläche projiziert werden können. Beispielsweise kann der Bereich, welcher mit dem erfindungsgemäßen Verfahren abgedeckt werden kann durch Hinzufügen des zweiten projizierten Plans zu dem projizierten Plan beliebig vergrößert und erweitert werden. Hierbei projizieren beispielsweise mehrere Projektionseinheiten verschiedene Teile von einem Gesamtplan auf zumindest teilweise überlappende, oder auch verschiedene Bereiche der Projektionsfläche. Die projizierten Pläne können auch unterschiedliche Teilgewerke wie Installationspläne, Elektropläne und/oder Bewehrungspläne umfassen. Zudem kann hierdurch auch die Genauigkeit beziehungsweise die Auflösung der projizierten Pläne erhöht werden. Dies kann auch durch eine Verringerung des Abstandes der Projektionseinheit oder der Projektionseinheiten von der Projektionsfläche oder durch Erhöhung der Brennweite der Projektionseinheit erfolgen. Beide dieser Vorgehensweisen führt auch zu einer Erhöhung der Leuchtdichte und Helligkeit des projizierten Plans bzw. der projizierten Pläne.

Gemäß der bevorzugten Ausführungsform des erfindungsgemäßen Verfahrens ist in dem projizierten Plan ein Positionsmarker enthalten, und das Verfahren umfasst das Erfassen des Positionsmarkers mit einem Augmented-Reality fähigen, tragbaren Gerät wie einem Smartphone, einer Augmented-Reality Brille, oder einem Tabletrechner. Das Augmented-Reality fähige, tragbare Gerät bestimmt anhand des erfassten Positionsmarkers und vorzugsweise der Position der Sensoreinheit und/oder der Projektionseinheit seine Position in Relation zu dem projizierten Pan, und ergänzt den projizierten Plan durch eine zweidimensionale oder dreidimensionale Repräsentation eines Konstruktionselements in Realmaßen. Hierdurch können zusätzliche Informationen an einen Benutzer bereitgestellt werden, welche alleine durch eine Projektion nur unzureichend darstellbar wären. Des Weiteren wird hierdurch ermöglicht verschiedenen Personen unterschiedliche Zusatzinformationen auszugeben, welche für verschiedene Tätigkeiten am selben Objekt relevant sein könnten.

Zusätzlich kann in dem Kalibrierungsschritt mittels der Sensoreinheit auch die Position eines auf der Projektionsfläche angebrachten Positionsmarkers mittels der Rechnereinheit erfasst werden. Dieser Positionsmarker kann in weiterer Folge ebenfalls von dem Augmented-Reality fähigen, tragbaren Gerät erfasst werden, wobei das Augmented-Reality fähige, tragbare Gerät anhand des erfassten Positionsmarkers und vorzugsweise der Position der Sensoreinheit und/oder der Projektionseinheit seine Position in Relation zu dem projizierten Pan bestimmt.

Das erfindungsgemäße Verfahren ist vorzugsweise zu einem Verfahren zur Konstruktion eines Gegenstands erweiterbar, wobei dieses zusätzlich die Schritte des Anordnens zumindest eines in dem projizierten Plan enthaltenen Konstruktionselements gemäß einer in dem projizierten Plan für dieses Konstruktionselement vorgesehenen Position auf der Proj ektionsfläche;
das Bestimmen einer Abweichung einer Position und/oder einer Form des auf der Projektionsfläche angeordneten Konstruktionselements von der im projizierten Plan für dieses Konstruktionselement vorgesehenen Position und/oder einer vorgegebenen Form mittels der Sensoreinheit;
und das Korrigieren der Position des auf der Projektionsfläche angeordneten Konstruktionselements, damit diese der im projizierten Plan für dieses Konstruktionselement vorgesehenen Position entspricht und/oder Austauschen des auf der Projektionsfläche angeordneten Konstruktionselements durch ein Konstruktionselement, dessen Form der vorgegebenen Form entspricht
umfasst.
Hierdurch wird sichergestellt, dass alle Konstruktionselemente plangemäß angeordnet werden.

Zusätzlich kann mit dem erfindungsgemäßen Verfahren auch eine Markierung auf dem, auf der Projektionsfläche angeordneten Konstruktionselement mittels der Sensoreinheit erfasst, und anhand der erfassten Markierung das Konstruktionselement identifiziert werden. Beispielsweise kann anhand der erfassten Markierung eine Seriennummer, ein Material oder einen Typus des Konstruktionselements von der Rechnereinheit bestimmt werden. Das erfindungsgemäße Verfahren kann das Abgleichen der Markierung des auf der Projektionsfläche angeordneten Konstruktionselements mit einer für dieses Konstruktionselement vorgegebenen Markierung, und bei einer Abweichung der erfassten Markierung von der vorgegebene, Markierung das Austauschen des Konstruktionselements durch ein Konstruktionselement mit einer Markierung, welche der vorgegebenen Markierung entspricht umfassen. Die Markierung auf dem Konstruktionselement kann beispielsweise eine Farbe, eine geometrische Form wie ein QR-Code oder ähnliches sein.

Vorzugsweise wird zudem ein optisches und/oder akustisches Signals mittels der Projektionseinheit und/oder eines Lautsprechers ausgegeben, wenn die Position und/oder die Form des Konstruktionselements auf der Projektionsfläche von der im projizierten Plan für dieses Konstruktionselement vorgesehenen Position und/oder der vorgegebenen Form abweicht und/oder mit dieser übereinstimmt. Hierdurch werden Arbeiter auf einen fehlerhaft ausgeführten Arbeitsschritt beziehungsweise ein fehlerhaft angeordnetes Konstruktionselement aufmerksam gemacht, oder über einen korrekt ausgeführten Arbeitsschritt informiert.

### [PM1]

Das Verfahren zur Konstruktion eines Gegenstands umfasst gemäß der bevorzugten Ausführungsform zudem das Erfassen einer Anzahl an auf der Projektionsfläche angeordneten Konstruktionselementen mittels der Sensoreinheit; und das Vergleichen der erfassten Anzahl an Konstruktionselementen mit einer im projizierten Plan vorgesehenen Anzahl an Konstruktionselementen. Hierdurch wird sichergestellt, dass kein Konstruktionselement vergessen wird. Vorzugsweise wird zudem ein optisches und/oder akustisches Signals mittels der Projektionseinheit und/oder des Lautsprechers ausgegeben, wenn die erfasste Anzahl an Konstruktionselementen mit der vorgesehenen Anzahl an Konstruktionselementen übereinstimmt und/oder von dieser abweicht.

In einem weiteren Schritt kann, wenn die Anzahl, die Form und die Position der auf der Projektionsfläche angeordneten Konstruktionselemente mit der im projizierten Plan vorgesehenen Anzahl, Form und Position übereinstimmt, der Kalibrierungsschritt erneut ausgeführt werden. Hierdurch wird die Oberflächenform der Projektionsfläche, sowie deren Lage in Relation zu der Position der Projektionseinheit und zu der Position der Sensoreinheit erneut bestimmt, da sich vor allem die Oberflächenform durch die Anordnung der Konstruktionselemente verändert hat. Hierdurch wird im projizierten Plan die veränderte Oberflächenform der Projektionsfläche berücksichtigt, wodurch der projizierte Plan auf der Projektionsfläche wieder einer unverzerrten, ebenen Darstellung des Plans in Realmaßen entspricht. Der Kalibrierungsschritt kann auch jederzeit, wie bereits erwähnt beispielsweise nach einer vorbestimmten Zeitspanne, nach einer mittels eines Temperatursensors erfassten Veränderung einer Temperatur der Projektionseinheit um mehr als einen vorbestimmten Grenzwert, nach einer Benutzereingabe an der Rechnereinheit, und/oder nach einer mittels eines Lagesensors erfassten Erschütterung, Bewegung, oder nach einer Positionsveränderung der Projektionseinheit und/oder der Sensoreinheit wiederholt werden.

Gemäß einer alternativen Ausführungsvariante des erfindungsgemäßen Verfahrens passt die Rechnereinheit die Projektionsverzerrung anhand einer bekannten Geometrie der einzelnen auf der Projektionsfläche angeordneten Konstruktionselemente laufend an, um stets eine unverzerrte, ebene Darstellung des Plans in Realmaßen zu gewährleisten.

Wenn die Anzahl, die Form und die Position der auf der Projektionsfläche angeordneten Konstruktionselemente mit der im projizierten Plan vorgesehenen Anzahl, Form und Position übereinstimmt, wird gemäß einer bevorzugten Ausführungsvariante des erfindungsgemäßen Verfahrens, mittels der Rechnereinheit anhand der im Kalibrierungsschritt erfassten Oberflächenform und Lage der Projektionsfläche in Relation zur Projektionseinheit und der Sensoreinheit eine Projektionsverzerrung an einem weiteren Plan durchgeführt, und der verzerrte weitere Plan von der Projektionseinheit derart auf die Projektionsfläche projiziert, sodass der projizierte weitere Plan auf der Projektionsfläche einer unverzerrten, ebenen Darstellung des weiteren Plans in Realmaßen entspricht. Der weitere Plan kann beispielsweise einen Plan eines darauffolgenden Arbeitsabschnitts, oder einer weiteren Konstruktionsphase darstellen.

Zusätzlich werden in der bevorzugten Ausführungsvariante die Schritte:
- Erfassen der Position von Personen und/oder Gegenständen innerhalb, und vorzugsweise im Umfeld der Projektionsfläche mittels der Sensoreinheit, und
- Ausgeben eines optischen und/oder akustischen Signals, mittels der Projektionseinheit und/oder eines Lautsprechers, wenn sich eine Person näher als eine vorbestimmte Distanz an einen vorbestimmten Bereich des projizierten Plans annähert
in dem erfindungsgemäßen Verfahren vorgesehen. Durch die Ausgabe des optischen und/oder akkustischen Signals wird eine Warnung an alle an einem Werkstück arbeitenden Personen ausgegeben, um zu verhindern, dass sich jemand in einen potentiellen Gefahrenbereich begibt. Vorzugsweise können auch weitere Einrichtungen, wie beispielsweise Kräne, Roboterarme und ähnliches mit der Rechnereinheit verbunden sein, wobei die Rechnereinheit ein Stoppsignal beziehungsweise einen Abschaltbefehl an diese Einrichtungen in einem derartigen Fall übermittelt. Dies trägt wesentliche zur Erhöhung der Arbeitssicherheit bei. Vorzugsweise können auch von den erfassten Personen ausgeführte Gesten oder auf der Projektionsfläche angeordnete Signale, wie beispielsweise Lichtpunkte, sowie Steuerungsmarkierungen von der Sensoreinheit erfasst werden, wobei die Rechnereinheit dazu eingerichtet ist diese als Steuersignale zu interpretieren.

Vorzugsweise erfolgt das Bestimmen der Abweichung der Position und/oder der Form des auf der Projektionsfläche angeordneten Konstruktionselements von der im projizierten Plan für dieses Konstruktionselement vorgesehenen Position und/oder der vorgegebenen Form mittels der Sensoreinheit mittels eines Raster-Reflexionsverfahrens, wobei als Senderaster der projizierte Plan herangezogen wird. Hierdurch muss kann die Bestimmung der Abweichung erfolgen, ohne den projizierten Plan durch ein anderes Sendemuster zu ersetzen, wodurch die Arbeit an einem Werkstück möglicherweise unterbrochen werden müsste.

Erfindungsgemäß wird die vorliegende Aufgabe auch durch die Bereitstellung eines Computerprogrammprodukts gelöst, welches zur Ausführung des erfindungsgemäßen Verfahrens ausgebildet ist.

Vorteilhafte Ausgestaltungen des erfindungsgemäßen Verfahrens und des erfindungsgemäßen Computerprogrammprodukts werden in weiterer Folge anhand der Figuren näher erläutert.
Figur 1 zeigt beispielhaft eine Vorrichtung zur Umsetzung des erfindungsgemäßen Verfahrens zur Visualisierung eines Plans in Realmaßen in einer schematischen Darstellung.
Figur 2a bis Figur 2c zeigten die Projektion eines Plans auf eine Projektionsfläche mit dem erfindungsgemäßen Verfahren.
Figur 3a bis Figur 3c zeigen die Verwendung von mehreren Projektionseinheiten und Sensoreinheiten in dem erfindungsgemäßen Verfahren.
Figur 4a bis Figur 4c zeigten einen Ausgleich einer Veränderung einer Oberflächenform der Projektionsfläche durch ein Konstruktionselement in einem mit dem erfindungsgemäßen Verfahren projizierten Plan.

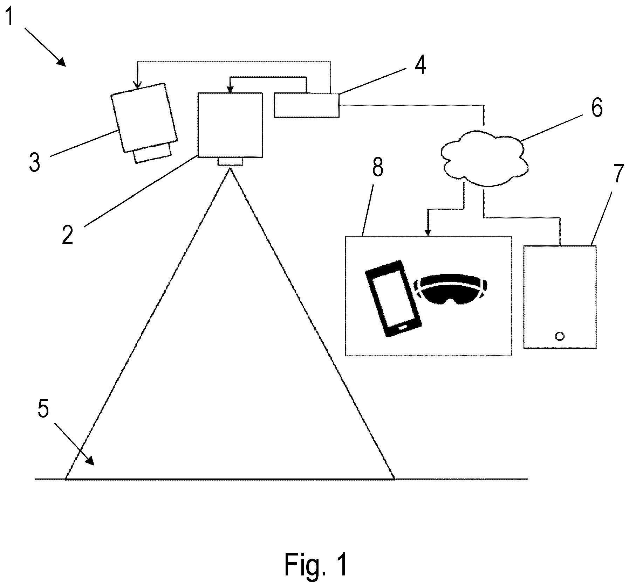

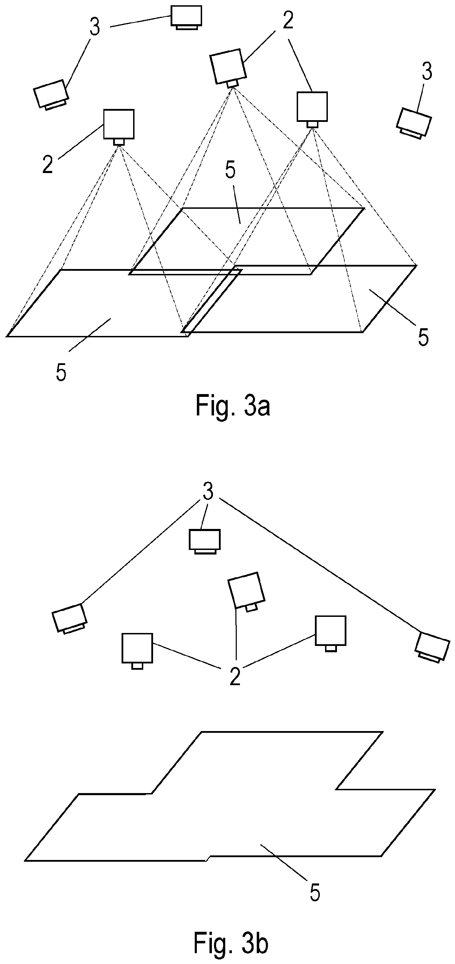

Die in Figur 1 dargestellte Vorrichtung 1 zur Durchführung des erfindungsgemäßen Verfahrens umfasst eine Projektionseinheit 2, und eine Sensoreinheit 3. Zudem umfasst die Vorrichtung 1 eine mit der Sensoreinheit 3 und der Projektionseinheit 2 verbundene Rechnereinheit 4. In dem erfindungsgemäßen Verfahren zur Visualisierung eines Plans in Realmaßen wird in einem Kalibrierungsschritt, unter Anwendung eines Raster-Reflexionsverfahrens, ein Sendemuster mittels der Projektionseinheit 2 auf eine Projektionsfläche 5 projiziert. Ein von der Projektionsfläche 5 reflektiertes Empfangsmuster wird infolgedessen von der Sensoreinheit 3 erfasst. Das Sendemuster kann beispielsweise ein genormtes Raster aus schwarzen und weißen Linien darstellen. Verschiedene, im Rahmen eines Raster-Reflexionsverfahrens anwendbare Sendemuster sind dem Fachmann allgemein bekannt. Erfindungsgemäß können auch mehrere Sensoreinheiten 3 vorgesehen sein. Dies ist in den Figuren 3a bis 3c ersichtlich. Die Projektionseinheit 2 kann beispielsweise ein herkömmlicher digitaler Lichtprojektor ein, und die Sensoreinheit 3 kann in Form einer digitalen Kamera bereitgestellt sein. Weitere Formen der Sensoreinheit 3 und der Projektionseinheit 2 sind dem Fachmann allgemein bekannt. Mittels der, mit der Projektionseinheit 2 und der Sensoreinheit 3 verbundenen Rechnereinheit 4 wird daraufhin anhand einer Verzerrung des Empfangsmusters im Vergleich zum Sendemuster eine Oberflächenform, sowie eine Lage der Projektionsfläche 5 in Relation zu einer Position der Projektionseinheit 2 und zu einer Position der Sensoreinheit 3 erfasst. In Figur 1 ist die Projektionsfläche 5 als ebene Fläche, und ohne Neigung dargestellt. Die Projektionsfläche 5 kann aber im Allgemeinen eine unbestimmte Oberflächenform beispielsweise mit Dellen und Rillen, und eine Neigung aufweisen. Der Kalibrierungsschritt des erfindungsgemäßen Verfahrens ermöglicht jedoch das erfindungsgemäße Verfahren auch bei komplexen Oberflächenformen und Oberflächenneigungen der Projektionsfläche 5 anzuwenden. Dies ist insbesondere vorteilhaft, wenn das erfindungsgemäße Verfahren beispielsweise auf einem bereits vorgefertigten Maschinenteil angewandt wird.

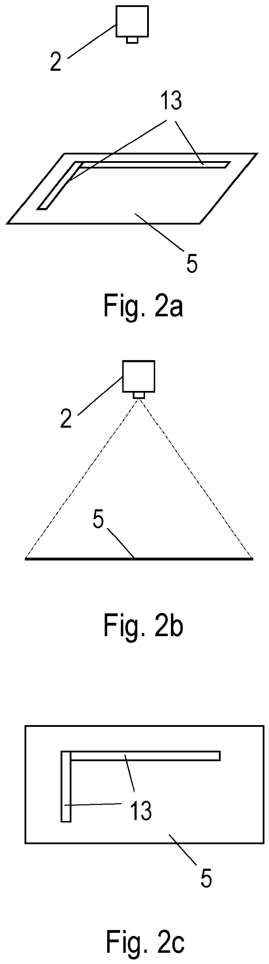

In einem weiteren Schritt des erfindungsgemäßen Verfahrens wird mittels der Rechnereinheit 4, anhand der im Kalibrierungsschritt erfassten Oberflächenform und Lage der Projektionsfläche 5 in Relation zur Projektionseinheit 2 eine Projektionsverzerrung an dem Plan durchgeführt, und der verzerrte Plan von der Projektionseinheit 2 derart auf die Projektionsfläche 5 projiziert, sodass der beispielsweise in Figur 2a und 2c ersichtliche projizierte Plan 13 auf der Projektionsfläche 5 einer unverzerrten, ebenen Darstellung des Plans in Realmaßen entspricht. Dies bedeutet, dass in dem projizierten Plan 13 angeführte Maße im Wesentlichen genau den realen Maßen entsprechen. Anders gesagt, wird beispielsweise eine gerade Linie, welche in dem Plan mit einer Länge von 1 Meter angegeben wird, in dem projizierten Plan 13 auf der Projektionsfläche 5 auch als eine ebene, gerade Linie mit einer Länge von 1 Meter widergegeben, unabhängig davon ob die Oberfläche der Projektionsfläche 5 im Verlauf der Linie eine Krümmung aufweist oder nicht. Eine derartige Krümmung wird im Kalibrierungsschritt erfasst, und durch die Projektionsverzerrung kompensiert. In den Figuren 2a bis 2c ist die Projektion des Plans im Detail dargestellt, wobei Figur 2a eine perspektivische Ansicht der Projektion des Plans auf die Projektionsfläche 5 zeigt. Figur 2b stellt eine Seitenansicht von Figur 2a dar. Figur 2c zeigt die Projektionsfläche 5 mit dem projizierten Plan 13 in Realmaßen in einer Draufsicht.
Das erfindungsgemäße Verfahren ermöglicht es somit auf im Wesentlichen jeglicher Oberfläche einen maßstabsgetreuen Plan in Realmaßen zu projizieren. Hierdurch können beispielsweise Konstruktionsarbeiten direkt auf der Projektionsfläche 5 erfolgen, ohne dass ein gesonderter Plan herangezogen und interpretiert werden muss. Durch den projizierten Plan 13 wird eine direkte Überprüfung jeglicher Arbeitsschritte ermöglicht, und das Risiko reduziert, dass ein Konstruktionsplan von Konstruktionspersonal falsch interpretiert wird. Des Weiteren können mittels der Projektionseinheit 2 Hilfestellungen und Anleitungen auf die Projektionsfläche 5 projiziert werden. Es kann auch ein Eingriff in eine Ablaufsteuerung beispielsweise bei einer teilautomatisierten Fertigung erfolgen und/oder Ressourcen neu zugeordnet werden.

Vorzugsweise wird der Kalibrierungsschritt nach einer vorbestimmten Zeitspanne, nach einer mittels eines Temperatursensors erfassten Veränderung einer Temperatur der Projektionseinheit 2 um mehr als einen vorbestimmten Grenzwert, nach einer Benutzereingabe an der Rechnereinheit 4, und/oder nach einer mittels eines Lagesensors erfassten Erschütterung bzw. Bewegung der Projektionseinheit 2 und/oder der Sensoreinheit 3 wiederholt. Hierdurch wird sichergestellt, dass der projizierte Plan 13 jederzeit maßstabsgetreu ist, und die in dem projizierten Plan 13 enthaltenen Maße den Realmaßen entsprechen. Die Benutzereingabe kann an die Rechnereinheit 4 beispielsweise auch über ein in Figur 1 ersichtliches Netzwerk 6, mit welchem die Rechnereinheit 4 verbindbar ist, oder über eine Fernbedienung 7 übermittelt werden. Der Temperatursensor und der Lagesensor sind in Figur 1 nicht ersichtlich. Die Fernbedienung 7 kann beispielsweise in Form eines Smartphones, einen Tabletrechners und Ähnlichem bereitgestellt sein. Eine Überwachung der Temperatur der Projektionseinheit 2 ist deshalb zielführend, da durch thermische Belastungen der Projektionseinheit 2 eine Dimensionsänderung beispielsweise eines Linsensystems der Projektionseinheit 2 erfolgt. Dies hat zur Folge, dass der projizierte Plan 13 zusätzlich verzerrt wird. Um eine derartige Verzerrung zu kompensieren kann der Kalibrierungsschritt erneut durchgeführt werden.

Gemäß einer alternativen, in den Figuren 3a und 3b ersichtlichen Ausführungsvariante des erfindungsgemäßen Verfahrens, kann der Kalibrierungsschritt zusätzlich für zumindest eine zweite Projektionseinheit 2 ausgeführt werden. In Figur 3a und Figur 3b ist das erfindungsgemäße Verfahren mit drei Projektionseinheiten 2 und drei Sensoreinheiten 3 dargestellt. Hierbei wird ein zweites Sendemuster mittels der zumindest einen zweiten Projektionseinheit 2 auf die Projektionsfläche 5 projiziert, und ein von der Projektionsfläche 5 reflektiertes zweites Empfangsmuster von der Sensoreinheit 3 erfasst. Gemäß dieser Ausführungsvariante ist die Rechnereinheit 4 auch mit der zweiten Projektionseinheit 2 verbunden. Die Rechnereinheit 4 ist vorzugsweise mit allen im Rahmen des erfindungsgemäßen Verfahrens verwendeten Projektionseinheiten 2 und Sensoreinheiten 3 verbunden. Mittels der, mit der zumindest einen zweiten Projektionseinheit 2 und der Sensoreinheit 3 verbundenen Rechnereinheit 4 wird anhand einer Verzerrung des zweiten Empfangsmusters im Vergleich zum zweiten Sendemuster die Oberflächenform, sowie die Lage der Projektionsfläche 5 in Relation zu einer Position der zumindest einen zweiten Projektionseinheit 2 und zu der Position der Sensoreinheit 3 erfasst. Mittels der Rechnereinheit 4 wird anhand der im Kalibrierungsschritt erfassten Oberflächenform und Lage der Projektionsfläche 5 in Relation zur zweiten Projektionseinheit 2 eine Projektionsverzerrung an einem zweiten Plan durchgeführt, und der verzerrte zweite Plan von der zweiten Projektionseinheit 2 derart auf die Projektionsfläche 5 projiziert, sodass der projizierte zweite Plan auf der Projektionsfläche 5 einer unverzerrten, ebenen Darstellung des zweiten Plans in Realmaßen entspricht. Hierdurch wird es ermöglicht mehr als einen Plan gleichzeitig oder auch alternativ zu projizieren. Der zweite Plan kann auch eine Erweiterung des ersten Plans darstellen, wobei sich der zweite Plan und der erste Plan auch zumindest teilweise überlappen können. Jeder der Pläne wird auf die Projektionsfläche 5 projiziert. Dies ist in Figur 2a ersichtlich. Hierdurch wird es ermöglicht den im Rahmen des erfindungsgemäßen Verfahrens genutzten Bereich der Projektionsfläche 5 beliebig zu erweitern. Figur 2b zeigt den durch die in Figur 2a dargestellte Anordnung genutzten Bereich der Projektionsfläche 5. Mehrere Projektionseinheiten 2 können somit verschiedene Teile von einem Gesamtplan auf zumindest teilweise überlappende, oder auch verschiedene Bereiche der Projektionsfläche 5 projizieren. Die projizierten Pläne 13 können auch unterschiedliche Teilgewerke wie Installationspläne, Elektropläne und/oder Bewehrungspläne umfassen. Zudem kann hierdurch auch die Genauigkeit beziehungsweise die Auflösung der projizierten Pläne 13 erhöht werden. Dies kann auch durch eine Verringerung des Abstandes der Projektionseinheit 2 oder der Projektionseinheiten 2 von der Projektionsfläche 5 oder durch Erhöhung der Brennweite der Projektionseinheit 2 oder von den Projektionseinheiten 2 erfolgen. Beide dieser Vorgehensweisen führt auch zu einer Erhöhung der Leuchtdichte und Helligkeit des projizierten Plans 13 bzw. der projizierten Pläne 13.

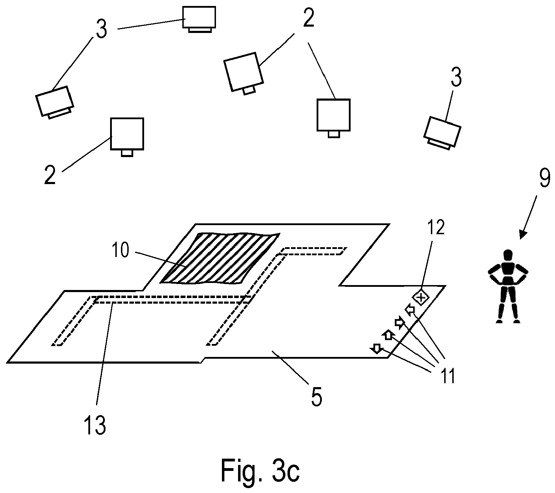

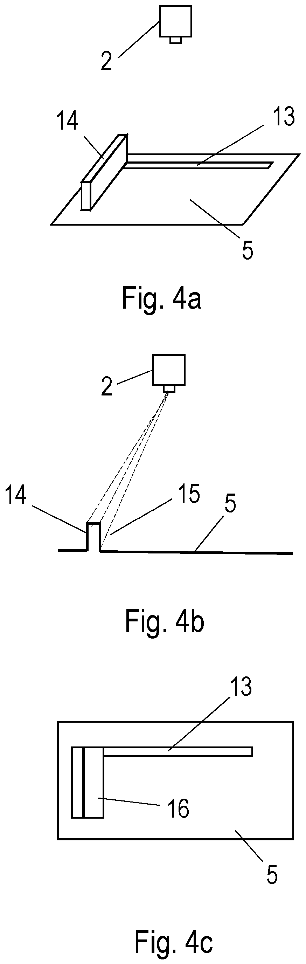

Gemäß einer bevorzugten Ausführungsvariante des erfindungsgemäßen Verfahrens ist in dem projizierten Plan 13 ein Positionsmarker 12 enthalten. Ein beispielhafter Positionsmarker 12 ist in Figur 3c ersichtlich. Das Verfahren umfasst in dieser Ausführungsvariante das das Erfassen des Positionsmarkers 12 mit einem Augmented-Reality fähigen, tragbaren Gerät 8 wie einem Smartphone, einer Augmented-Reality Brille, oder einem Tabletrechner. Das Augmented-Reality fähige, tragbare Gerät 8 bestimmt anhand des erfassten Positionsmarkers 12 und vorzugsweise der Position der Sensoreinheit 3 und/oder der Projektionseinheit 2 seine Position in Relation zu dem projizierten Pan 13, und ergänzt den projizierten Plan 13 durch eine zweidimensionale oder dreidimensionale Repräsentation eines Konstruktionselements 14 in Realmaßen. Hierdurch ermöglicht das erfindungsgemäße Verfahren einem bestimmten Arbeiter beziehungsweise Benutzer über zusätzliche, und bei Bedarf auch räumliche Informationen zu verfügen, welche beispielsweise für andere Arbeiter nicht relevant sein könnten. Zudem wird es hierdurch ermöglicht Elemente darzustellen, welche möglicherweise durch andere Konstruktionselemente 14 in dem projizierten Plan 13 verdeckt sind. Die Platzierung von Konstruktionselementen 14 auf der Projektionsebene 5 wird nachstehend in Bezug auf Figur 4a bis Figur 4c erläutert.

Zusätzlich kann in dem Kalibrierungsschritt mittels der Sensoreinheit 3 auch die Position eines auf der Projektionsfläche 5 angebrachten, in Figur 3c ersichtlichen, Positionsmarkers 12 mittels der Rechnereinheit 4 erfasst werden. Beispielsweise kann der Positionsmarker 12 auf der Projektionsfläche aufgeklebt oder aufgemalt sein. Dieser Positionsmarker 12 kann in weiterer Folge ebenfalls von dem Augmented-Reality fähigen, tragbaren Gerät 8 erfasst werden, wobei das Augmented-Reality fähige, tragbare Gerät 8 anhand des erfassten Positionsmarkers 12 und vorzugsweise der Position der Sensoreinheit 3 und/oder der Projektionseinheit 2 seine Position in Relation zu dem projizierten Plan 13 bestimmt.

Es kann zudem mit der Projektionseinheit 2 eine dreidimensionale Repräsentation eines Konstruktionselements 14 auf die Projektionsfläche 5 projiziert werden. Dies erfolgt mittels einer perspektivischen Verzerrung beispielsweise eines 3D Modells des Konstruktionselements 14 mit der Rechnereinheit 4 unter Einbeziehung der Projektionsverzerrung. Die dreidimensionale Repräsentation kann auch zumindest zwei in der Projektionsfläche 5 translatorisch verschobene, vorzugsweise zumindest teilweise überlappende, zweidimensionale Schnittdarstellungen des Konstruktionselements 14 umfassen. Hierbei sind die Schnittdarstellungen entsprechend der perspektivischen Verzerrung und der Projektionsverzerrung in der Projektionsebene 5 angeordnet.

Das erfindungsgemäße Verfahren ist vorzugsweise ein Verfahren für die Konstruktion eines Gegenstandes, wobei dieses zusätzlich das Anordnen zumindest eines in dem projizierten Plan 13 enthaltenen Konstruktionselements 14 gemäß einer in dem projizierten Plan 13 für dieses Konstruktionselement 14 vorgesehenen Position auf der Projektionsfläche 5 umfasst. In weiterer Folge wird eine Abweichung einer Position und/oder einer Form des auf der Projektionsfläche 5 angeordneten Konstruktionselements 14 von der im projizierten Plan 13 für dieses Konstruktionselement 14 vorgesehenen Position und/oder einer vorgegebenen Form mittels der Sensoreinheit 3 erfasst. Daraufhin wird die Position des auf der Projektionsfläche 5 angeordneten Konstruktionselements 14 korrigiert, damit diese der im projizierten Plan 13 für dieses Konstruktionselement 14 vorgesehenen Position entspricht. Alternativ oder zusätzlich wird das auf der Projektionsfläche 5 angeordneten Konstruktionselements 14 durch ein Konstruktionselement 14, dessen Form der vorgegebenen Form entspricht ausgetauscht. Hierdurch wird sichergestellt, dass die richtigen Konstruktionselemente 14, in der richtigen Position gemäß dem projizierten Plan 13 angeordnet beziehungsweise verbaut werden. Durch die ebene Darstellung des Plans in realmaßen ist eine falsche Anordnung oder die Verwendung eines falschen Konstruktionselements 14 für das Personal unmittelbar ersichtlich. Beispielsweise würde die Verwendung eines zu langen oder eines zu dicken Bewehrungselements durch einen Vergleich mit dem projizierten Plan 13 direkt ersichtlich.

Das Verfahren zur Konstruktion des Gegenstands umfasst vorzugsweise zudem das Ausgeben eines optischen und/oder akustischen Signals mittels der Projektionseinheit 2 und/oder eines Lautsprechers, welcher in Figur 1 nicht dargestellt ist. Dies erfolgt, wenn die Position und/oder die Form des Konstruktionselements 14 auf der Projektionsfläche 5 von der im projizierten Plan 13 für dieses Konstruktionselement 14 vorgesehenen Position und/oder der vorgegebenen Form abweicht und/oder mit dieser übereinstimmt. Hierdurch wird der Vorteil erreicht, dass entweder ein Bestätigungssignal ausgegeben wird, welches darauf hinweist, dass das richtige Konstruktionselement 14 in der richtigen Position angeordnet wurde, oder ein Hinweissignal ausgegeben wird, welches auf ein fehlerhaftes oder falsches Konstruktionselement 14, und/oder auf eine nicht plangemäße Anordnung hinweist. Zusätzlich kann mit dem erfindungsgemäßen Verfahren auch eine Markierung auf dem, auf der Projektionsfläche 5 angeordneten Konstruktionselement 14 mittels der Sensoreinheit 3 erfasst, und anhand der erfassten Markierung das Konstruktionselement 14 identifiziert werden. Beispielsweise kann anhand der erfassten Markierung eine Seriennummer, ein Material oder einen Typus des Konstruktionselements 14 von der Rechnereinheit 4 bestimmt werden. Das erfindungsgemäße Verfahren kann das Abgleichen der Markierung des auf der Projektionsfläche 5 angeordneten Konstruktionselements 14 mit einer für dieses Konstruktionselement 14 vorgegebenen Markierung, und bei einer Abweichung der erfassten Markierung von der vorgegebenen Markierung, das Austauschen des Konstruktionselements 14 durch ein Konstruktionselement 14 mit einer Markierung, welche der vorgegebenen Markierung entspricht umfassen. Die Markierung auf dem Konstruktionselement 14 kann beispielsweise eine Farbe, eine geometrische Form wie ein QR-Code oder ähnliches sein.

Erfindungsgemäß umfasst das Verfahren zudem vorzugsweise die Schritte des Erfassens einer Anzahl an auf der Projektionsfläche 5 angeordneten Konstruktionselementen 14 mittels der Sensoreinheit 3 und das Vergleichen der erfassten Anzahl an Konstruktionselementen 14 mit einer im projizierten Plan 13 vorgesehenen Anzahl an Konstruktionselementen 14. Hierdurch wird sichergestellt, dass kein Konstruktionselement 14 übersehen wird. Zudem kann vorgesehen sein, dass ein eines optischen und/oder akustischen Signals mittels der Projektionseinheit 2 und/oder des Lautsprechers ausgegeben wird, wenn die erfasste Anzahl an Konstruktionselementen 14 mit der vorgesehenen Anzahl an Konstruktionselementen 14 übereinstimmt und/oder von dieser abweicht.

Zudem wird vorzugsweise, wenn die Form und die Position der auf der Projektionsfläche 5 angeordneten Konstruktionselemente 14 mit der im projizierten Plan 13 vorgesehenen Anzahl, Form und Position übereinstimmt, der Kalibrierungsschritt erneut ausgeführt. Hierbei wird die Kalibrierung mit den auf der bisherigen Projektionsfläche 5 angeordneten Konstruktionselementen 14 durchgeführt. Die Oberflächenform der Projektionsfläche 5 wird durch die Anordnung der Konstruktionselemente 14 auf der Proj ektionsfläche 5 mit der Zeit verändert. Hierdurch ergeben sich Verzerrungen in dem projizierten Plan 13, welche durch die Projektionsverzerrung nicht kompensiert werden können, da diese im vorhergegangenen Kalibrierungsschritt nicht erfasst werden konnten. Um diese auszugleichen wird der Kalibrierungsschritt erneut ausgeführt, wodurch die veränderte Oberflächenform der Projektionsfläche 5 mit den darauf angeordneten Konstruktionselementen 14 erfasst, und anschließend mittels der Projektionsverzerrung kompensiert werden kann.

Gemäß einer alternativen Ausführungsvariante des erfindungsgemäßen Verfahrens passt die Rechnereinheit 4 die Projektionsverzerrung anhand einer bekannten Geometrie der einzelnen auf der Projektionsfläche 5 angeordneten Konstruktionselemente 14 laufend an, um stets eine unverzerrte, ebene Darstellung des Plans in Realmaßen zu gewährleisten.

Die Anpassung des projizierten Plans 13 an die veränderte Geometrie der Oberfläche der Projektionsebene 5 ist Figur 4a bis Figur 4c ersichtlich. In Figur 4a wird ein Konstruktionselement 14 auf eine vorgesehene Position im projizierten Plan 13 auf der Projektionsebene 5 angeordnet. Hierdurch veränderte dich die Oberflächenform der Projektionsebene 5, da in dieser nun das Konstruktionselement 14, wie in Figur 4b ersichtlich angeordnet ist. Dieses bewirkt eine zusätzliche Verzerrung des projizierten Plans 13, wodurch an der Stelle des Konstruktionselement 14 der projizierte Plan 13 nicht mehr in Realmaßen dargestellt würde. Nun kann entweder, wie oben beschrieben mittels erneuter Ausführung des Kalibrierungsschritts, oder mittels Einbeziehung der bekannten Geometrie des Konstruktionselements 14 in die Projektionsverzerrung die Darstellung des projizierten Plans 13 korrigiert werden, um wiederum eine unverzerrte Darstellung des projizierten Plans 13 in Realmaßen zu erreichen. Wird dies durchgeführt, wird in dem projizierten Plan unter anderem die Höhe des Konstruktionselements 14 berücksichtigt. Figur 4c stellt dar, wie die Darstellung des projizierten Plans 13 infolgedessen verändert wird. Figur 4c zeigt die Projektionsebene mit dem projizierten Plan 13, nachdem das Konstruktionselement 14 wieder entfernt worden wäre, ohne eine erneute Anpassung der Projektionsverzerrung durchzuführen. Die korrigierte Höhe einer Seitenwand 15 des Konstruktionselements 14 führt zu einer zusätzlichen Breite 16 des Konstruktionselements 14 im projizierten Plan 13, welche auf die Seitenwand 15 des Konstruktionselements 14 projiziert wird, solange das Konstruktionselement 14 in der Projektionsfläche 5 angeordnet ist.

Hierdurch wird im projizierten Plan 13 die veränderte Oberflächenform der Projektionsfläche 5 berücksichtigt, wodurch der projizierte Plan 13 auf der Projektionsfläche 5 wieder einer unverzerrten, ebenen Darstellung des Plans in Realmaßen entspricht. Der Kalibrierungsschritt kann auch jederzeit, wie bereits erwähnt beispielsweise nach einer vorbestimmten Zeitspanne, nach einer mittels eines Temperatursensors erfassten Veränderung einer Temperatur der Projektionseinheit 2 um mehr als einen vorbestimmten Grenzwert, nach einer Benutzereingabe an der Rechnereinheit 4, und/oder nach einer mittels eines Lagesensors erfassten Erschütterung, Bewegung, oder nach einer Positionsveränderung der Projektionseinheit 2 und/oder der Sensoreinheit 3 wiederholt werden. Ein durch das Konstruktionselement 14 in der Projektionsfläche 5 erzeugter Schatten kann beispielsweise durch vorsehen einer weiteren Projektionseinheit 2, wie in den Figuren 3a bis 3c gezeigt, kompensiert werden.

Gemäß der bevorzugten Ausführungsvariante des erfindungsgemäßen Verfahrens wird, wenn die Anzahl, die Form und die Position der auf der Projektionsfläche 5 angeordneten Konstruktionselemente 14 mit der im projizierten Plan 13 vorgesehenen Anzahl, Form und Position übereinstimmt, mittels der Rechnereinheit 4 anhand der im Kalibrierungsschritt erfassten Oberflächenform und Lage der Projektionsfläche 5 in Relation zur Projektionseinheit 2 eine Projektionsverzerrung an einem weiteren Plan durchgeführt. Der verzerrte weitere Plan wird anschließend von der Projektionseinheit 2 derart auf die Projektionsfläche 5 projiziert, sodass der projizierte weitere Plan auf der Projektionsfläche 5 einer unverzerrten, ebenen Darstellung des weiteren Plans in Realmaßen entspricht. Dies ermöglicht, nach dem Abschluss einer bestimmen Konstruktionsphase oder eines Konstruktionsabschnitts einen neuen Plan für den nächsten Abschnitt auf die Projektionsebene 5 mit den darauf angeordneten Konstruktionselementen zu projizieren, welcher wiederum unverzerrten, ebenen Darstellung des weiteren Plans in Realmaßen entspricht.

Wie in Figur 3c dargestellt, umfasst das erfindungsgemäße Verfahren zur Erhöhung der Sicherheit des Konstruktionspersonals vorzugsweise das Erfassen der Position von Personen 9 und/oder Gegenständen innerhalb, und vorzugsweise im Umfeld der Projektionsfläche 5 mittels der Sensoreinheit 3. Zudem wird ein optischen und/oder akustisches Signal, mittels der Projektionseinheit 2 und/oder dem Lautsprecher ausgegeben, wenn sich eine Person 9 näher als eine vorbestimmte Distanz an einen vorbestimmten Bereich 10 des projizierten Plans 13 annähert. Hierdurch wird eine Warnung bereitgestellt, wenn sich eine Person 9 an einen Gefahrenbereich annähert oder sich in diesen begibt. Vorzugsweise können auch weitere Einrichtungen, wie beispielsweise Kräne, Roboterarme und ähnliches mit der Rechnereinheit 4 über das Netzwerk 6 verbunden sein, wobei die Rechnereinheit 4 ein Stoppsignal beziehungsweise einen Abschaltbefehl an diese Einrichtungen in einem derartigen Fall übermittelt. Dies trägt wesentliche zur Erhöhung der Arbeitssicherheit bei. Die Erfassung der Personen 9 kann beispielsweise mittels eines durch die Rechnereinheit 4 durchgeführten Bilderkennungsverfahren erfolgen. Alternativ oder zusätzlich hierzu können die Personen 9 beispielsweise Helme in Signalfarben, oder einen Erkennungsmarker tragen, welcher von der Sensoreinheit 3 erfasst, und der Rechnereinheit 4 einfach detektiert werden kann.

Vorzugsweise können, wie in Figur 3c dargestellt, auch von den erfassten Personen 9 ausgeführte Gesten oder auf der Projektionsfläche 5 angeordnete Signale 11, wie beispielsweise Lichtpunkte, und/oder Steuerungsmarkierungen von der Sensoreinheit 3 erfasst werden, wobei die Rechnereinheit 4 dazu eingerichtet ist diese als Steuersignale zu interpretieren. Alternativ kann auch ein Überdecken der Signale 11, beispielsweise von einer Hand der Person 9 von der Sensoreinheit 3 erfasst werden, wobei die Rechnereinheit 4 das Überdecken zumindest eines der Signale 11 als Steuersignal zu interpretiert wird. Hierdurch wird eine Möglichkeit zur Benutzereingabe bereitgestellt. Ein Steuersignal kann beispielsweise eine Anfrage zur Änderung des projizierten Plans 13, beispielsweise des ersetzen eines Bewehrungsplans durch einen Leitungsplan umfassen. Die Signale 11 können entweder mittels der Projektionseinheit 2 auf die Projektionsfläche 5 projiziert, oder auf der Projektionsfläche 5 aufgemalt, aufgeklebt oder in einer anderen Weise aufgebracht sein.

Vorzugsweise erfolgt die Bestimmung der Abweichung der Position und/oder der Form des auf der Projektionsfläche 5 angeordneten Konstruktionselements 14 von der im projizierten Plan 13 für dieses Konstruktionselement 14 vorgesehenen Position und/oder der vorgegebenen Form mittels der Sensoreinheit 3 mittels eines Raster-Reflexionsverfahrens. Hierbei wird als Senderaster der projizierte Plan 13 herangezogen. Somit muss in diesem Bestimmungsschritt nicht ein gesondertes Muster auf die Projektionsfläche 5 projiziert werden, und die Bestimmung kann erfolgen, ohne die Arbeitsvorgänge des Konstruktionspersonals zu stören.

Das erfindungsgemäße Computerprogramprodukt, welches zu Ausführung des erfindungsgemäßen Verfahrens ausgebildet ist kann auf der Rechnereinheit 4 ausgeführt werden, um die weiteren Komponenten, wie die Sensoreinheit 3 und die Projektionseinheit 2 zu steuern. Das Computerprogrammprodukt kann auch auf einem Datenspeicher, wie einem USB-Stick, einer Festplatte, oder einem Cloud-Speicher bereitgestellt sein.

## Patentansprüche

1. Verfahren zur Visualisierung eines Plans in Realmaßen, wobei
- in einem Kalibrierungsschritt, unter Anwendung eines Raster-Reflexionsverfahrens, ein Sendemuster mittels einer Projektionseinheit (2) auf eine Projektionsfläche (5) projiziert, und ein von der Projektionsfläche (5) reflektiertes Empfangsmuster von zumindest einer Sensoreinheit (3) erfasst wird, und mittels einer, mit der Projektionseinheit (2) und der Sensoreinheit (3) verbundenen Rechnereinheit (4) anhand einer Verzerrung des Empfangsmusters im Vergleich zum Sendemuster eine Oberflächenform, sowie eine Lage der Projektionsfläche (5) in Relation zu einer Position der Projektionseinheit (2) und zu einer Position der Sensoreinheit (3) erfasst wird, und
- mittels der Rechnereinheit (4) anhand der im Kalibrierungsschritt erfassten Oberflächenform und Lage der Projektionsfläche (5) in Relation zur Projektionseinheit (2) eine Projektionsverzerrung an dem Plan durchgeführt, und der verzerrte Plan von der Projektionseinheit (2) derart auf die Projektionsfläche (5) projiziert wird, sodass der projizierte Plan (13) auf der Projektionsfläche (5) einer unverzerrten, ebenen Darstellung des Plans in Realmaßen entspricht.

2. Verfahren gemäß Anspruch 1, wobei der Kalibrierungsschritt nach einer vorbestimmten Zeitspanne, nach einer mittels eines Temperatursensors erfassten Veränderung einer Temperatur der Projektionseinheit (2) um mehr als einen vorbestimmten Grenzwert, nach einer Benutzereingabe an der Rechnereinheit (4), und/oder nach einer mittels eines Lagesensors erfassten Erschütterung oder Bewegung der Projektionseinheit (2) und/oder der Sensoreinheit (3) wiederholt wird.

3. Verfahren gemäß einem der Ansprüche 1 oder 2, wobei
- der Kalibrierungsschritt zusätzlich für zumindest eine zweite Projektionseinheit (2) ausgeführt wird, wobei ein zweites Sendemuster mittels der zumindest einen zweiten Projektionseinheit (2) auf die Projektionsfläche (5) projiziert, und ein von der Projektionsfläche (5) reflektiertes zweites Empfangsmuster von der Sensoreinheit (3) erfasst wird, und mittels der, mit der zumindest einen zweiten Projektionseinheit (2) und der Sensoreinheit (3) verbundenen Rechnereinheit (4) anhand einer Verzerrung des zweiten Empfangsmusters im Vergleich zum zweiten Sendemuster die Oberflächenform, sowie die Lage der Projektionsfläche (5) in Relation zu einer Position der zumindest einen zweiten Projektionseinheit (2) und zu der Position der Sensoreinheit (3) erfasst wird;
- wobei mittels der Rechnereinheit (4) anhand der im Kalibrierungsschritt erfassten Oberflächenform und Lage der Projektionsfläche (5) in Relation zur zweiten Projektionseinheit (2) eine Projektionsverzerrung an einem zweiten Plan durchgeführt, und der verzerrte zweite Plan von der zweiten Projektionseinheit (2) derart auf die Projektionsfläche (5) projiziert wird, sodass der projizierte zweite Plan auf der Projektionsfläche (5) einer unverzerrten, ebenen Darstellung des zweiten Plans in Realmaßen entspricht.

4. Verfahren gemäß einem der Ansprüche 1 bis 3, wobei in dem projizierten Plan (13) zumindest ein Positionsmarker (12) enthalten ist, und das Verfahren das Erfassen des Positionsmarkers (12) mit einem Augmented-Reality fähigen, tragbaren Gerät (8) wie einem Smartphone, einer Augmented-Reality Brille, oder einem Tabletrechner umfasst, wobei das Augmented-Reality fähige, tragbare Gerät (8) anhand des erfassten Positionsmarkers (12) und vorzugsweise der Position der Sensoreinheit (3) und/oder der Projektionseinheit (2) seine Position in Relation zu dem projizierten Pan (13) bestimmt, und den projizierten Plan (13) durch eine zweidimensionale oder dreidimensionale Repräsentation eines Konstruktionselements (14) in Realmaßen ergänzt.

5. Verfahren zur Konstruktion eines Gegenstands umfassend ein Verfahren zur Visualisierung eines Plans in Realmaßen gemäß einem der Ansprüche 1 bis 4, umfassend die Schritte:
- Anordnen zumindest eines in dem projizierten Plan (13) enthaltenen Konstruktionselements (14) gemäß einer in dem projizierten Plan (13) für dieses Konstruktionselement (14) vorgesehenen Position auf der Projektionsfläche (5);
- Bestimmen einer Abweichung einer Position und/oder einer Form des auf der Projektionsfläche (5) angeordneten Konstruktionselements (14) von der im projizierten Plan (13) für dieses Konstruktionselement (14) vorgesehenen Position und/oder einer vorgegebenen Form mittels der Sensoreinheit (3);
- Korrigieren der Position des auf der Projektionsfläche (5) angeordneten Konstruktionselements (14), damit diese der im projizierten Plan (13) für dieses Konstruktionselement (14) vorgesehenen Position entspricht und/oder Austauschen des auf der Projektionsfläche (5) angeordneten Konstruktionselements (14) durch ein Konstruktionselement (14), dessen Form der vorgegebenen Form entspricht.

6. Verfahren gemäß Anspruch 5, umfassend den Schritt:
- Ausgeben eines optischen und/oder akustischen Signals mittels der Projektionseinheit (2) und/oder eines Lautsprechers, wenn die Position und/oder die Form des Konstruktionselements (14) auf der Projektionsfläche (5) von der im projizierten Plan (13) für dieses Konstruktionselement (14) vorgesehenen Position und/oder der vorgegebenen Form abweicht und/oder mit dieser übereinstimmt.

7. Verfahren gemäß einem der Ansprüche 5 oder 6, umfassend die Schritte:
- Erfassen einer Anzahl an auf der Projektionsfläche (5) angeordneten Konstruktionselementen (14) mittels der Sensoreinheit (3);
- Vergleichen der erfassten Anzahl an Konstruktionselementen (14) mit einer im projizierten Plan (13) vorgesehenen Anzahl an Konstruktionselementen (14).

8. Verfahren gemäß Anspruch 7, umfassend den Schritt:
- Ausgeben eines optischen und/oder akustischen Signals mittels der Projektionseinheit (2) und/oder des Lautsprechers wenn die erfasste Anzahl an Konstruktionselementen (14) mit der vorgesehenen Anzahl an Konstruktionselementen (14) übereinstimmt und/oder von dieser abweicht.

9. Verfahren gemäß einem der Ansprüche 7 oder 8, wobei wenn die Anzahl, die Form und die Position der auf der Projektionsfläche (5) angeordneten Konstruktionselemente (14) mit der im projizierten Plan (13) vorgesehenen Anzahl, Form und Position übereinstimmt, der Kalibrierungsschritt erneut ausgeführt wird.

10. Verfahren gemäß einem der Ansprüche 7 bis 9, wobei wenn die Anzahl, die Form und die Position der auf der Projektionsfläche (5) angeordneten Konstruktionselemente (14) mit der im projizierten Plan (13) vorgesehenen Anzahl, Form und Position übereinstimmt, mittels der Rechnereinheit (4) anhand der im Kalibrierungsschritt erfassten Oberflächenform und Lage der Projektionsfläche (5) in Relation zur Projektionseinheit (2) eine Projektionsverzerrung an einem weiteren Plan durchgeführt, und der verzerrte weitere Plan von der Projektionseinheit (2) derart auf die Projektionsfläche (5) projiziert wird, sodass der projizierte weitere Plan auf der Projektionsfläche (5) einer unverzerrten, ebenen Darstellung des weiteren Plans in Realmaßen entspricht.

11. Verfahren gemäß einem der Ansprüche 5 bis 10, umfassend die Schritte:
- Erfassen der Position von Personen und/oder Gegenständen innerhalb, und vorzugsweise im Umfeld der Projektionsfläche (5) mittels der Sensoreinheit (3), und
- Ausgeben eines optischen und/oder akustischen Signals, mittels der Projektionseinheit (2) und/oder eines Lautsprechers, wenn sich eine Person näher als eine vorbestimmte Distanz an einen vorbestimmten Bereich des projizierten Plans (13) annähert.

12. Verfahren gemäß einem der Ansprüche 5 bis 11, wobei das Bestimmen der Abweichung der Position und/oder der Form des auf der Projektionsfläche (5) angeordneten Konstruktionselements (14) von der im projizierten Plan (13) für dieses Konstruktionselement (14) vorgesehenen Position und/oder der vorgegebenen Form mittels der Sensoreinheit (3) mittels eines Raster-Reflexionsverfahrens erfolgt, wobei als Senderaster der projizierte Plan (13) herangezogen wird.

13. Computerprogramprodukt, welches zu Ausführung eines Verfahrens gemäß einem der Ansprüche 1 bis 12 ausgebildet ist.
